# EUROPÄISCHE PATENTANMELDUNG

(11) **EP 0 584 615 A1**
(43) Veröffentlichungstag der Anmeldung: **02.03.1994**
(21) Anmeldenummer: 93112651.0
(22) Anmeldetag: 06.08.1993
(51) Int. Cl.: H02H 5/04, G01R 31/34, H02K 11/00

(54) **Messeinrichtung zur Bestimmung der Wicklungstemperatur einer elektrischen Maschine**

(30) Priorität: 21.08.1992 DE 4227797
(71) Anmelder: SIEMENS AKTIENGESELLSCHAFT, D-80333 München (DE)
(72) Erfinder: Giessler, Folke, Dr., D-97616 Bad Neustadt/Saale (DE)

(57) **Zusammenfassung**

Die Erfindung betrifft eine Meßeinrichtung zur Bestimmung der Wicklungstemperatur einer mehrphasigen elektrischen Maschine (EM 1), bei der in mindestens einem als Meßstrang ausgewählten Strang (U) mittels einer Gleichspannungsquelle ein vom Betriebsstrom unabhängiger Gleichstrom eingespeist wird und eine von den in dem zu überwachenden Meßstrang (U) anstehenden Wechselgrößen unabhängige Messung des Gleichstromes erfolgt. Eine Verbesserung der Messung wird dadurch erreicht, daß die Wechselströme und/oder die Wechselspannungen aller Stränge (U, V und W) so addiert werden, daß sie sich jeweils zu Null ergänzen.

## Beschreibung

Eine dem Oberbegriff entsprechende Meßeinrichtung ist aus der DE-C-764 503 bekannt. Die Änderung der Temperatur der Wicklung wird durch eine Widerstandsmeßeinrichtung überwacht, die unmittelbar an zwei Punkten gleichen Potentials der zu überwachenden Wicklung angeschlossen ist. Diese Widerstandsmeßeinrichtung wird von einem vom Betriebsstrom unabhängigen Meßstrom gespeist. Zwischen den Punkten gleichen Potentials fließt kein Betriebsstrom, so daß ein von einer Spannungsquelle konstanter Spannung gelieferter Meßstrom dem Widerstand der zu überwachenden Wicklung proportional ist. Analog werden bei im Stern geschalteten Wicklungen Sternpunkte gleichen Potentials gebildet und die Temperatur beispielsweise durch ein Nullinstrument überwacht.

Allen Ausführungsvarianten einer solchen Meßeinrichtung ist gemein, daß zur Kompensation der Betriebsgrößen, die meist Wechselgrößen sind, Punkte gleichen Potentials als Anschlüsse für Meßklemmen unmittelbar an den Wicklungen vorgesehen sind. Die zu schützenden Wicklungen müssen also entweder zugänglich sein oder bereits bei der Herstellung in spezieller, zur Überwachung geeigneter Weise gefertigt werden. Eine Überwachung bereits bestehender elektrischer Maschinen, deren Wicklungen in der Regel nicht zugänglich sind, ist mit einer derartigen Meßeinrichtung nicht möglich.

Bei einer aus der DD-PS-108 419 bekannten Meßeinrichtung fließt ein vom Betriebsstrom unabhängiger Hilfsgleichstrom durch die zu überwachende Wicklung. Der durch diese Wicklung fließende Hilfsgleichstrom und der entsprechende Spannungsabfall wird gemessen und daraus auf den Widerstand der zu untersuchenden Wicklung und damit ihre Temperatur geschlossen. Die zur Widerstandsmessung benötigten Gleichgrößen werden dadurch gewonnen, daß die überlagerten Wechselgrößen durch entsprechende RC-Glieder abgespalten werden.

Die bei der vorbeschriebenen Meßeinrichtung vorgesehene Kompensation der überlagerten Wechselgrößen ist aufwendig, da die verwendeten RC-Glieder genau auf die zu kompensierenden Wechselgrößen ausgelegt sein müssen. Darüber hinaus können durchaus übliche Strom- oder Spannungsschwankungen die Güte der Kompensation und damit die angeschlossenen Meßinstrumente gefährden.

Der vorliegenden Erfindung liegt die Aufgabe zugrunde, ein verbessertes Meßverfahren von hoher Genauigkeit zur Bestimmung der Wicklungstemperatur von mehrphasigen elektrischen Maschinen zu schaffen.

Die Lösung der gestellten Aufgabe gelingt durch die im Kennzeichen des Anspruchs 1 genannten Merkmale.

Mit der Erfindung ist eine Meßeinrichtung geschaffen, die es ermöglicht, ohne direkten Zugang oder spezielle Ausführung der zu schützenden Wicklungen deren Temperatur anhand einer an sich bekannten Widerstandsmessung zu bestimmen. Die Meßeinrichtung kann ohne weitere Vorkehrungen an elektrische Maschinen angeschlossen werden. Ferner sind aufwendige Siebschaltungen zur Kompensation der die Widerstandsmessung behindernden Wechselgrößen nicht erforderlich, da sich die Wechselgrößen zu Null ergänzen. Dieses Verfahren der Superposition hat weiter den Vorteil, daß die Wechselgrößen meßtechnisch erst gar nicht erfaßt werden müssen und die Meßtechnik so sehr viel sensibler auf die üblicherweise viel kleineren Gleichgrößen ausgelegt werden kann.

Die im Anspruch 2 beschriebene Meßeinrichtung weist in jedem zum Meßstrang zusätzlichen Maschinenstrang je einen Spannungsmeßwandler auf, der an je einen, dem im Meßstrang befindlichen Meßshunt entsprechenden Meßshunt angeschlossen ist. Die Spannungsmeßwandler übersetzen den Wechselspannungsabfall der Meßshunts im Verhältnis 1 : 1 und sind mit ihren Sekundärwicklungen in Reihe zum im Meßstrang befindlichen Meßshunt geschaltet. Die Reihenschaltung der Sekundärwicklungen und des im Meßstrang angeordneten Meßshunts ist so ausgeführt, daß sich die an diesen Elementen anstehenden Wechselspannungen zu Null addieren. Damit kann der Reihenschaltung die zur Temperaturbestimmung notwendige Gleichgröße entnommen werden.

Da die Spannungsmeßwandler nur Wechselgrößen übersetzen können, ist sichergestellt, daß die Kompensation der Wechselgrößen nicht durch, in den nicht als Meßstrang ausgewählten Maschinensträngen mögliche, überlagerte Gleichgrößen gefährdet wird.

Das Übersetzungsverhältnis von 1 : 1 ergibt sich durch die Verwendung von gleichen Meßshunts in allen Strängen. Der Einsatz von gleichen Meßshunts ist sinnvoll, da so die Kompensation zuverlässiger und der Schaltungsaufbau und Aufwand geringer bleibt, als wenn unterschiedliche Meßshunts mit entsprechend unterschiedlichen Spannungsmeßwandlern verwendet werden.

Die Meßeinrichtung nach Anspruch 3 stellt eine vorteilhafte Ausgestaltung des Teiles der Meßeinrichtung dar, der das Gleichspannungssignal oder eine dem Gleichspannungssignal proportionale Gleichgröße mißt, sofern das Gleichspannungssignal nicht bekannt und fest vorgegeben ist. Dabei wird an alle Maschinenstränge je ein Meßshunt derart angeschlossen, daß sich ein künstlicher Sternpunkt ergibt.

Durch die Bildung dieses Sternpunktes wird wiederum eine Kompensation der Wechselgrößen erreicht, wobei auch im Falle einer Schieflast die Wechselgrößen sicher kompensiert werden und somit die Gleichgröße unabhängig vom Belastungsfall der Maschine erfaßbar ist.

Durch den Einsatz von abgleichbaren Spannungswandlern ist die Möglichkeit gegeben, sowohl etwaige Unterschiede im Verhalten der Meßshunts als auch weitere Ungenauigkeiten an übrigen an der Kompensation beteiligten Elementen so zu korrigieren, daß die Kompensation der Wechselgrößen fehlerfrei erfolgt.

Durch den Einbau mindestens einer Diode im Meßstrang ist eine Gleichspannungsquelle nur unter Benützung von passiven Bauteilen realisiert. Dabei wird die Schwellenspannung einer oder mehrerer im Meßstrang befindlicher Dioden als Gleichspannungssignal verwendet. Die maximale Höhe des Gleichspannungssignals wird durch die Anzahl der in Reihe geschalteten Dioden vorgegeben.

Eine Veränderung der Höhe des Gleichspannungssignals wird dadurch möglich, daß, von mehreren im Meßstrang angeordneten Dioden, mindestens eine Diode mittels eines parallelen Schaltelementes überbrückt werden kann. Diese Möglichkeit erweitert das potentielle Anwendungsgebiet des Meßverfahrens, ohne daß bauliche Veränderungen an der Meßeinrichtung vorgenommen werden müssen. Außerdem kann die Höhe des Gleichspannungssignals sinnvoll an unterschiedliche Arbeitspunkte der zu überwachenden elektrischen Maschine angepaßt werden.

Dadurch, daß parallel zu der oder den Dioden eine Freilaufdiode angeordnet ist, ist ein wirkungsvoller Schutz gegen Überspannungen gegeben.

Bei einer gemäß Anspruch 8 ausgestalteten Meßeinrichtung besteht die Möglichkeit, die Meßeinrichtung insgesamt abzuschalten. Damit kann zum Beispiel die Messung an der stillgesetzten elektrischen Maschine gestoppt werden oder die Überwachung statt kontinuierlich in periodischer Folge durchgeführt werden.

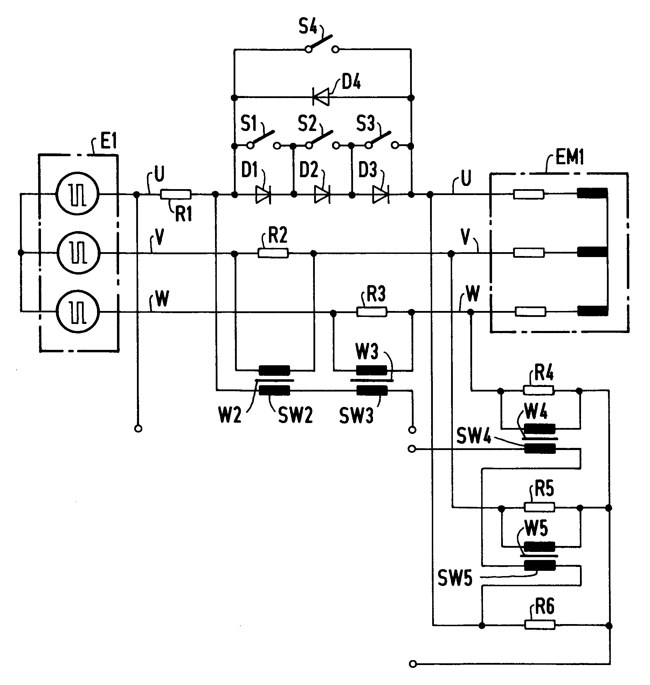

Anhand eines in der Zeichnung dargestellten Prinzipschaltplanes wird das angemeldete Meßverfahren näher beschrieben.

Bei dem dargestellten Ausführungsbeispiel wird die Wicklungstemperatur eines als Meßstrang ausgewählten Stranges U einer elektrischen Maschine EM1 überwacht.

Die elektrische Maschine EM1 wird über drei Stränge U, V und W aus einer Speiseeinrichtung E1 mit Wechselstrom gespeist.

Eine aus Dioden D1 bis D3 bestehende Diodenstrecke ist im Meßstrang U angeordnet. Die Schwellenspannungen der in Vorwärtsrichtung geschalteten Dioden D1 bis D3 addieren sich zu einem Gleichspannungssignal, das der Wechselspannung des Meßstranges U überlagert ist. Im Meßstrang U ist zusätzlich ein Meßshunt R1 angeordnet, an dem eine Wechselspannung mit überlagerter Gleichspannung abfällt.

In den restlichen Maschinensträngen V und W ist ebenfalls je ein Meßshunt R2 und R3 angeordnet. Die verwendeten Meßshunts R1, R2 und R3 haben alle den gleichen Widerstandswert. Parallel zum Meßshunt R2 ist ein Spannungsmeßwandler W2 angeschlossen. Ein Spannungsmeßwandler W3 ist analog am Meßshunt R3 angeschlossen.

Die Sekundärwicklungen SW2 und SW3 der Spannungsmeßwandler W2 und W3 sind mit dem im Meßstrang U liegenden Meßshunt R1 in Reihe geschaltet. Der Spannungsabfall an der Reihenschaltung aus dem Meßshunt R1 und den Sekundärwicklungen SW2 und SW3 ist dem im Meßshunt R1 fließenden Gleichstrom proportional, da sich die Wechselspannungen der Reihenschaltung zu Null ergänzen.

Die Dioden D1 bis D3 im Meßstrang U werden durch eine Freilaufdiode D4 gegen Überspannungen geschützt.

Die Höhe des Gleichspannungssignals läßt sich variieren, indem einzelne Dioden der Diodenstrecke D1 bis D3 im Meßstrang U durch Betätigung eines zu den jeweiligen Dioden D1 bis D3 parallel liegenden Schaltelementes S1 bis S3 überbrückt werden. Wird beispielsweise das Schaltelement S2 geschlossen, so ist die Diode D2 überbrückt und es steht nur noch die Schwellenspannung der Dioden D1 und D3 als Gleichspannungssignal im Meßstrang U an.

Ein Schalter S4, parallel zu der Diodenstrecke D1 bis D3, eröffnet die Möglichkeit, die Meßeinrichtung insgesamt abzuschalten. Durch das Schließen des Schalters S4 wird die gesamte Diodenstrecke D1 bis D3 überbrückt.

Falls die Höhe des Gleichspannungssignals nicht bekannt ist, muß eine Messung der Höhe dieses Signals durchgeführt werden.

Hierfür ist an jedem Strang U, V und W je ein Meßshunt R4, R5 und R6 mit seinem einen Anschluß angeschlossen. Die Meßshunts R4, R5 und R6 sind mit ihrem anderen Anschluß zu einem künstlichen Sternpunkt zusammengeschaltet. Am Meßshunt R4, der am Strang W angeschlossen ist, ist ein Spannungsmeßwandler W4 und am Meßshunt R5, der am Strang V angeschlossen ist, ein Spannungsmeßwandler W5 angeschlossen. Die Spannungsmeßwandler W4 und W5 übersetzen den Wechelspannungsabfall an den Meßshunts R4 und R5 im Verhältnis 1 : 1. Die Sekundärwicklungen SW4 und SW5 der Spannungsmeßwandler W4 und W5 sind mit dem am Meßstrang U angeschlossenen Meßshunt R6 in Reihe geschaltet.

Somit kann analog zur Bestimmung der dem im Meßstrang U fließenden Gleichstrom proportionalen Größe eine dem Gleichspannungssignal proportionale Größe an der Reihenschaltung aus den Spannungsmeßwandlern SW4 und SW5, sowie dem Meßshunt R6 abgegriffen werden. Die Wechselspannungsabfälle an den Sekundärwicklungen SW4 und SW5 ergänzen sich mit dem Wechselspannungsabfall am Meßshunt R6 zu Null, so daß nur die dem Gleichspannungssignal proportionale Größe isoliert verbleibt.

Diese Größe kann gemeinsam mit der dem im Meßstrang U fließenden Gleichstrom proportionalen Größe einer nicht in der Zeichnung dargestellten Auswerteeinrichtung zugeführt werden. In der Auswerteeinrichtung läßt sich anhand der zugeführten Größen der Wert des ohmschen Widerstandes der im Meßstrang U befindlichen Wicklung ermitteln. Dieser Wert ist ein sehr genaues Maß für die Temperatur dieser Wicklung.

Das beschriebene Verfahren ermöglicht eine kontinuierliche Überwachung des Betriebes. Damit kann rechtzeitig zu einer etwaigen Abschaltung der elektrischen Maschine eine entsprechende Signalisierung erfolgen und Gegenmaßnahmen zur Verhinderung der Abschaltung eingeleitet werden. Die Maschine wird demnach nur in Abstimmung mit einer entsprechenden Auswerteeinrichtung stillgesetzt.

## Patentansprüche

1. Meßeinrichtung zur Bestimmung der Wicklungstemperatur einer mehrphasigen elektrischen Maschine (EM 1), bei der in mindestens einem als Meßstrang ausgewählten Strang (U) mittels einer Gleichspannungsquelle ein vom Betriebsstrom unabhängiger Gleichstrom eingespeist wird und eine von den in dem zu überwachenden Meßstrang (U) anstehenden Wechselgrößen unabhängige Messung des Gleichstromes erfolgt,
**dadurch gekennzeichnet,**
daß die Wechselströme und/oder die Wechselspannungen aller Stränge (U, V und W) so addiert werden, daß sie sich jeweils zu Null ergänzen.

2. Meßeinrichtung nach Anspruch 1,
**dadurch gekennzeichnet,**
daß in jedem zum Meßstrang (U) zusätzlichen Strang (V, W) ein, dem im Meßstrang (U) befindlicher Meßshunt (R1) entsprechender Meßshunt (R2, R3) angeordnet und an diese Meßshunts (R2, R3) der zusätzlichen Stränge (V, W) je ein Spannungsmeßwandler (W2, W3) angeschlossen ist, ferner die Spannungswandler (W2, W3) ein Übersetzungsverhältnis von 1:1 aufweisen und mit ihren Sekundärwicklungen (SW2, SW3) in Reihe geschaltet sind, wobei ein Abgriff der an dem Meßshunt (R1) und der Reihenschaltung der Sekundärwicklungen (SW2, SW3) abfallenden Gesamtspannung vorgesehen ist.

3. Meßeinrichtung nach Anspruch 1 und/oder 2,
**dadurch gekennzeichnet,**
daß mittels weiterer, jeweils an die Stränge (U, V, W) angeschlossener Meßshunts (R4, R5, R6) ein künstlicher Sternpunkt gebildet ist, wobei die an den nicht mit dem Meßstrang (U) verbundenen Meßshunts (R4, R5) abfallenden Spannungen jeweils von Spannungsmeßwandlern (W4, W5) im Verhältnis 1:1 übersetzt werden, wobei die Sekundärwicklungen (SW4, SW5) der Spannungsmeßwandler (W4, W5) mit dem mit dem Meßstrang (U) verbundenen Meßshunt (R6) in Reihe geschaltet sind und ein Abgriff der Gesamtspannung dieser Reihenschaltung vorgesehen ist.

4. Meßeinrichtung nach Anspruch 2 und/oder 3,
**dadurch gekennzeichnet,**
daß die Spannungsmeßwandler (W2, W3, W4 und W5) abgleichbar sind.

5. Meßeinrichtung nach einem oder mehreren der vorhergehenden Ansprüche,
**dadurch gekennzeichnet,**
daß im Meßstrang (U) mindestens eine Diode (D1) angeordnet ist.

6. Meßeinrichtung nach Anspruch 5,
**dadurch gekennzeichnet,**
daß mehrere Dioden (D1 - D3) im Meßstrang (U) angeordnet sind und mindestens eine Diode (D1 bzw. D2 bzw. D3) mittels eines Schaltelementes (S1 bzw. S2 bzw. S3) überbrückbar ist.

7. Meßeinrichtung nach Anspruch 5 oder 6,
**dadurch gekennzeichnet,**
daß zu der oder den Dioden (D1 - D3) eine Freilaufdiode (D4) parallel geschaltet ist.

8. Meßeinrichtung nach Anspruch 5, 6 oder 7,
**dadurch gekennzeichnet,**
daß die im Meßstrang (U) liegende Diodenstrecke (D1 - D3) mittels eines Schalters (S4) insgesamt überbrückbar ist.
